# EUROPEAN PATENT APPLICATION

(11) **EP 4 289 657 A1**
(43) Date of publication of application: **13.12.2023**
(21) Application number: 22177612.3
(22) Date of filing: 07.06.2022
(51) Int. Cl.: B60L 53/53, B60L 53/54, B60L 53/57, B60L 53/64, B60L 53/66

(54) **A METHOD OF CONTROLLING CHARGING OF AN ELECTRICALLY POWERED MACHINE**

(71) Applicant: Volvo Construction Equipment AB, 631 85 Eskilstuna (SE)
(72) Inventor: KVIST, Roland, 363 91 Braås (SE); BERGSTRÖM, Johanna, 413 23 Göteborg (SE); LARSSON, Bo, 421 67 Västra Frölinda (SE)
(74) Representative: Valea AB

(57) **Abstract**

The present disclosure relates to a method (100) of controlling electric charging of at least one electrically powered machine (400). The method is performed by a charging station (200) comprising a plurality of electric energy sources (210), a charging interface (220) for electrically connecting with an electrically powered machine (400), and a control unit (230). The method comprises collecting (S1) data about each one of the at least one electrically powered machine (400) and obtaining (S2) a status of each one of the plurality of electric energy sources (210). The method further comprises determining (S3) a charging strategy based on the collected data, the obtained status and on a predetermined charging focus of the charging strategy, and subsequently charging (S4) the at least one electrically powered machine (400) according to the determined charging strategy.

The disclosure further relates to a control unit (230), a charging station (200) and a vehicle or vessel (300) comprising the charging station.

## Description

### TECHNICAL FIELD

The present disclosure relates to a method of controlling charging of at least one electrically powered machine. The present disclosure also relates to a control unit configured to monitor and control the electric charging and to a charging station comprising the control unit, a computer program, a computer readable medium and to a vehicle or vessel comprising the charging station.

### BACKGROUND

Electric charging of batteries is needed for charging electrical machines and vehicles. Especially machines with limited or no ability to travel to a distant charging station need considerations. Examples of such applications are excavator sites, construction sites, forestry machines and stationary applications. Today, the required electrical infrastructure is often not available at those sites and fossil fuels are used to power applications where electricity is not available.

Further, when several machines are in need of electric charging, it is of interest to carry out the charging in a controlled and optimal manner which considers aspects such as the speed of charging, the productivity of the work site, prioritized vehicles, the cost of electric energy, CO2 footprint of the supplied electric energy, etc.

### SUMMARY

Therefore, an object of the disclosure is to remedy at least some of the shortcomings of the present electrical infrastructure. More specifically, an object of the present disclosure is to provide a method of charging at least one electrically powered machine using a charging station comprising a plurality of electric energy sources. Another object is to provide a control unit for monitoring and controlling electric charging of at least one electrically powered machine, and a charging station comprising a plurality of electric energy sources and the control unit.

According to a first aspect of the present disclosure, the object is at least partly achieved by a method according to claim 1.

Hence, there is provided a method of controlling electric charging of at least one electrically powered machine. The method is performed by a charging station comprising a plurality of electric energy sources, a charging interface for electrically connecting with an electrically powered machine, and a control unit. The method comprises collecting data about each one of the at least one electrically powered machine, obtaining a status of each one of the plurality of electric energy sources, and determining a charging strategy based on the collected data, the obtained status and on a pre-determined charging focus of the charging strategy, and subsequently charging the at least one electrically powered machine according to the determined charging strategy.

Electrically powered machines are herein to be understood as electrically powered heavy-duty vehicles, such as trucks, buses, construction equipment, and work machines, e.g. dump trucks and wheel loaders. The term "electrically powered machine" as used herein may further be understood as including stationary machines, such as stationary machines that may be operating at work sites, and vessels, such as marine vessels.

The data relating to the at least one electrically powered machine may be collected and processed by a control unit of the charging station to determine a charging need of each one of the at least one electrically powered machine. The charging need may further be balanced against a charging focus. The charging focus may relate to reducing cost of electric charging, reducing CO2 emissions, such as by using CO2 neutral electric energy, productivity increase by prioritization of certain electrically powered machines in a charging queue, faster charging speed, etc. Such a charging focus may be pre-defined by an operator of the charging station and accessed by the charging station, such as by the control unit of the charging station. The charging focus may be manually and/or automatically updated over time, e.g. depending on operator requirements and/or depending on dynamic conditions of the environment in which the at least one electrically powered machine operates.

The data may be collected by wireless communication between the electrically powered machine and the charging station. The data may be requested from the electrically powered machine by the charging station and sent to the charging station, in response to the request, by the electrically powered machine. The data may alternatively be sent periodically to the charging station by the electrically powered machine. Alternatively, the data may be uploaded to a cloud service by the electrically powered machine. The data may thereafter be accessed by the charging station to determine the charging needs.

Data may be collected from electrically powered machines which are within a certain range of the charging station. The range may be pre-set depending on the application or deployment of the charging station. Alternatively, the data may be collected from electrically powered machines which are pre-registered on a service list used by the charging station. Such a list may further comprise static data on each pre-registered electrically powered machine, such static data may be charging prioritization of the electrically powered machine, and/or operating schedule of the electrically powered machine.

The status of each one of the plurality of electric energy sources relates to availability and/or cost of electric power at each one of the plurality of electric energy sources and/or CO2 emissions of the available electric energy.

The charging strategy is thus determined based on the collected data about each one of the at least one electrically powered machines and on the obtained status of each one of the plurality of electric energy sources, as well as on the pre-determined charging focus of the charging strategy. Thereby, the charging strategy enables optimizing the charging operation of the at least one electrically powered machine and/or operation of the charging station in terms of cost, CO2 emissions, productivity, battery lifetime, etc. The charging strategy may thus determine which electrically powered machine to charge, when to charge it, what electric energy source(s) to use, and at what power level the electrically powered machine should be charged.

Optionally, the step of determining the charging strategy comprises selecting at least one electrically powered machine to charge, selecting at least one of the plurality of the electric energy sources and setting a charging power for each one of the at least one selected electric energy sources to be used when charging the at least one electrically powered machine in view of the pre-determined charging focus of the charging strategy.

Selection of at least one electric energy source may be performed depending on factors such as the required speed of charging, i.e. the required charging power, on the cost of electric energy, and/or on CO2 emissions, etc.

For instance, a prioritized electrically powered machine in need of charging might call for high-power charging using a power battery. A power battery is herein defined as a battery having a relatively high output capacity, i.e. a high current rating (C rating). Alternatively, such a high-power charging operation could be performed by selecting and using multiple electric energy sources simultaneously.

On the other hand, an electrically powered machine which does not require immediate charging, such as a machine in a scheduled standstill mode, could be charged at a relatively low power in order to extend battery lifetime. For such an application, an electric energy source in the form of an energy battery might be selected. An energy battery is herein defined as a battery having a relatively large storage capacity but a limited output capacity in comparison with a power battery.

If the charging focus relates to low CO2 emissions, electric energy sources generated by fossil fuels or grid power, which is not certified as CO2 neutral, may be excluded from the charging operation.

After selection of the at least one electric energy source to be used when charging, the output power of each selected electric energy source may be set in order to provide the required charging power during a suitable timeframe.

Optionally, the step of selecting at least one electrically powered machine, selecting at least one of the plurality of the electric energy sources and the step of setting the charging power for each one of the at least one electric energy sources may be based on the data collected about the at least one electrically powered machine and/or on the obtained status of each one of the plurality of energy sources.

Optionally, the data collected about each one of the at least one electrically powered machine relates to at least one of a state of charge of an electric energy storage system of the at least one electrically powered machine, consumption rate of electric energy, geographic location, work schedule, and/or handling time, and wherein the status obtained of each one of the plurality of electric energy sources relates to at least one of a state of charge, a power capacity, a fuel level, a cost of electric energy and/or a CO2 emission factor of the electric energy available from the electric energy source.

The selection of at least one of the plurality of the electric energy sources and the setting of charging power may depend on the availability of stored electric energy in each one of the plurality of electric energy sources, as well as on the required output power during charging. In addition, the charging strategy may consider cost and/or CO2 emissions associated with each one of the plurality of electric energy sources and prioritization of the electrically powered machines being serviced, and/or optimization of battery lifetime of either, or both, electrically powered machines and of the plurality of electric energy sources.

The state of charge (SOC) of an electrically powered machine and the consumption rate of electric energy may indicate how urgent a charging operation is in order to maintain the electrically powered machine in service. The work schedule may indicate how the charging station should prioritize the electrically powered machine in relation to other electrically powered machines serviced by the charging station, such that productivity is maintained. The work schedule may also indicate whether other electrically powered machines depend on the electrically powered machine in question or not. Strong dependence may indicate a high prioritization in order to avoid bottlenecks in productivity, such as might occur if a highly prioritized machine would be forced to shut down.

The geographic location in relation to the charging station and the handling time may indicate how much time the charging operation may require, apart from the charging of the battery itself.

Optionally, the pre-determined charging focus is based on at least one of a lifetime of at least one of the plurality of electric energy sources, a cost of electric energy, charging time, a productivity of the at least one electrically powered machine, and/or CO2 emissions.

As indicated above, the charging strategy may be determined such that the lifetime of an electric energy source may be extended by limiting the output power of said electric energy source when charging an electrically powered machine, e.g. by allowing the charging time to be extended. For instance, information from the collected data, such as from the work schedules of the electrically powered machine, may be used to determine when the electrically powered machine may be charged at a reduced output power.

The cost of electric energy of each one of the electric energy sources may be information which is stored by the control unit. Alternatively, the information may be regularly accessed or received by the control unit. The cost of the available electric energy of each one of the plurality of electric energy sources may be weighed to determine the least costly charging operation.

A charging focus based on charging time is herein to be understood as a goal to reduce the time required for charging. Charging speed may be increased such as by charging using a power battery at high output power, and/or by increasing the output power by using multiple electric energy sources when charging.

Productivity may be increased or maintained such as by processing the work schedules collected from the at least one electrically powered machine to determine suitable time slots for charging.

Similar to the cost of electric energy, CO2 emissions may be information which is stored by the control unit. Alternatively, the information may be regularly accessed or received by the control unit. The CO2 emissions of the available electric energy of each one of the plurality of electric energy sources may be weighed to select a source associated with low CO2 emissions.

Optionally, at least two electrically powered machines require charging and the charging focus is based on at least one of a total productivity of the at least two electrically powered machines, and/or CO2 emissions.

In case multiple electrically powered machines are serviced by the charging station, the charging strategy may be determined such that productivity may be increased or maintained by processing multiple collected work schedules to ensure that charging of the electrically powered machines is synchronized with works schedules, electric energy consumption rates, geographic locations, etc. Thereby, a fleet of electrically powered machines (e.g. vehicles) may be coordinated with the charging station to increase or maintain productivity of the fleet, such as to avoid bottlenecks, i.e. where the operations of at least two electrically powered machines are interrelated. It is generally important to prevent simultaneous depletion of electric energy storages in order to be able to charge the electrically powered machines separately in an ordered sequence.

Regarding CO2 emissions, it may be acceptable to charge a low-consumption electrically powered machine using an electric energy source having some CO2 emissions, while a high-consumption electrically powered machine may only be charged using a zero-CO2 emissions electric energy source.

Optionally, the method comprises simultaneous charging of a plurality of electrically powered machines using an individually determined charging strategy for each one of the electrically powered machines.

If capacity allows, one electrically powered machine may be charged using one electric energy source, while another electrically powered machine is charged using a different electric energy source. As an example, an urgently needed electrically powered machine may be charged using an electric energy source in the form of a power battery, while another machine in a standstill mode is charged using an energy battery.

According to second aspect of the present disclosure, the object is at least partly achieved by a control unit according to claim 8.

Hence, there is provided a control unit configured to monitor and control electric charging of at least one electrically powered machine according to the method of any one of the embodiments of the first aspect of the disclosure.

The control unit may comprise processing circuitry, a data storage device and a communication unit and be configured to communicate wirelessly with the at least one electrically powered machine to collect data. The control unit may further be configured to obtain a status of each one of the plurality of electric energy sources. The control unit may be configured to select at least one electric energy source and to set a power output of the selected at least one energy source in accordance with embodiments of the first aspect of the disclosure.

According to a third aspect of the present disclosure, the object is at least partly achieved by a charging station according to claim 9.

Hence, there is provided a charging station comprising a plurality of electric energy sources, a charging interface for electrically connecting with an electrically powered machine, and the control unit according to any one of the embodiments of the second aspect of the disclosure.

The charging interface may be electrical cables and connectors adapted for electrical connection between the electrically powered machine and the charging station.

Optionally, the plurality of electric energy sources comprises at least one of a power battery, an energy battery, a fuel cell, a genset and/or a grid connection.

The fuel cell may be supplied by a liquid gas storage, such as hydrogen. The genset may be fuelled by fossil fuels to generate electricity. The grid connection may be a connection to the electric grid in an area where the charging station is deployed.

Optionally, the charging station is mobile.

A mobile charging station may comprise the plurality of electric energy sources. The mobile charging station may further comprise at least one liquid gas storage to supply any fuel cells. Such a liquid gas storage may also be configured as a separate mobile unit.

The mobility of the charging station may advantageously be used to improve an infrastructure for electrically powered machines in remote areas or where existing infrastructure has been damaged. The mobility may further be used to charge low-mobility electrically powered machines, or machines which are stationary. A mobile charging station may also seek out and charge electrically powered machines with depleted energy storages.

According a fourth aspect of the present disclosure, the object is at least partly achieved by a computer program according to claim 12.

Hence, there is provided a computer program comprising program code to cause the control unit according to any one of the embodiments of the second aspect of the disclosure to execute the steps of any one of the embodiments of the first aspect of the present disclosure.

According a fifth aspect of the present disclosure, the object is at least partly achieved by a computer readable medium according to claim 13.

Hence, there is provided a computer readable medium having stored thereon the computer program of any one of the embodiments of the fourth aspect of the present disclosure.

According to a sixth aspect of the present disclosure the object is at least partly achieved by a vehicle or vessel according to claim 14.

Hence, there is provided a vehicle or vessel comprising the charging station according to any one of the embodiments of the third aspect of the present disclosure.

The vehicle or vessel comprising the charging station may be a truck, with or without a trailer, or a marine vessel. The charging station may be permanently installed on the vehicle or vessel, or it may be a module which may be transported and unloaded and deployed from the vehicle or vessel.

Further advantages and advantageous features of the invention are disclosed in the following description and in the dependent claims.

### BRIEF DESCRIPTION OF THE DRAWINGS

With reference to the appended drawings, below follows a more detailed description of embodiments of the invention cited as examples.

In the drawings:
- Fig. 1: shows a vehicle comprising a charging station according to an aspect of the present disclosure
- Fig. 2: shows a charging station according to the present disclosure
- Fig. 3: shows a method according to an aspect of the present disclosure
- Fig. 4: shows a detailed flowchart of the method of Fig. 2

### DETAILED DESCRIPTION OF EXAMPLE EMBODIMENTS OF THE INVENTION

The present disclosure is developed in more detail below, referring to the appended drawings which show examples of embodiments. The disclosure should not be viewed as limited to the described examples of embodiments; instead, it is defined by the appended patent claims. Like numbers refer to like elements throughout the description.

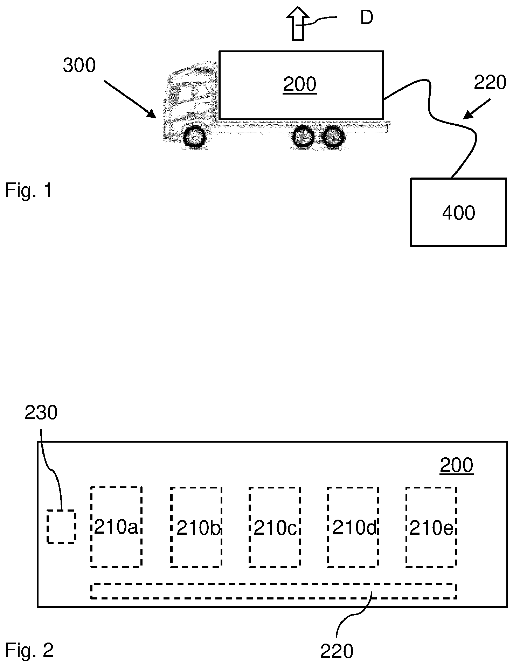

**Fig. 1** illustrates a **vehicle 300** comprising a **charging station 200** for electrically charging at least one **electrically powered machine 400** according to the present disclosure. The vehicle 300 may be a heavy-duty vehicle, such as a truck. The vehicle 300 may further have a trailer (not shown). The vehicle 300 could alternatively be a vessel 300, such as a marine vessel. In the illustrated example, the charging station 200 is a mobile charging station provided on a vehicle 300. The charging station 200 may thus either be permanently installed on the vehicle or vessel 300, or it may be configured to be unloaded from a vehicle or vessel and deployed, as indicated by **arrow D,** in an area of operation to improve the electrical infrastructure of the area, such as a work site, a remote, isolated, area or an area with damaged electrical infrastructure or where the infrastructure is insufficient.

Fig. 1 shows an example of one electrically powered machine 400 being charged. However, a plurality of electrically powered machines 400 may be charged simultaneously, depending on the present capacity of the charging station 200 and on the power requirements of the electrically powered machines 400 in need of charging.

As shown in **Fig. 2****,** the charging station 200 may comprise a plurality of **electric energy sources 210a-e,** a **charging interface 220** and a **control unit 230.** The charging interface 220 may comprise electrical cables and connectors, as shown in Fig. 1, adapted for electrical connection between the at least one electrically powered machine 400 and the charging station 200.

The control unit 230 is configured to monitor and control electric charging of at least one electrically powered machine 400 according to the steps of described hereinbelow.

The control unit 230 may comprise processing circuitry, a data storage device and a communication unit and may be configured to communicate wirelessly with the at least one electrically powered machine 400 to collect data. The control unit 230 may further be configured to obtain a status of each one of the plurality of electric energy sources 210a-e. The control unit 230 may determine a charging strategy based on the collected data, the obtained status and on a pre-determined charging focus. Via the charging strategy, the control unit 230 may be configured to select at least one electrically powered machine 400 to charge, to select at least one electric energy source 210 and to set a power output of the selected at least one energy source 210 and to charge the at least one electrically powered machine 400 in accordance with the herein described method.

The plurality of electric energy sources 210a-e may comprise at least one of a **power battery 210a, an energy battery 210b, a fuel cell 210c, a genset 210d** and/or a **grid connection 210e.** Of course, the plurality of electric energy sources 210a-e may comprise any combination of electric energy sources selected from the above-mentioned electric energy sources. For example, the plurality of electric energy sources 210a-e may include several electric energy sources of the same type in combination with one or more electric energy sources of a different type.

A power battery 210a may be a battery having a relatively high output capacity, i.e. a high current rating (C rating), suitable for fast charging.

An energy battery may be a battery having a relatively large energy storage capacity but a limited output capacity in comparison with a power battery.

A fuel cell 210c may be supplied with fuel from a pressurized liquid gas storage (not shown), such as a hydrogen fuel storage. The liquid gas storage may be comprised in the charging station 200. The liquid gas storage may alternatively be a separate mobile or non-mobile module which may be fluidly connected to the fuel cell 210c of the charging station 200. In the case of a mobile liquid gas storage, the liquid gas storage may be carried on a trailer of the vehicle 300.

The genset 210d may be fuelled by fossil fuels to generate electricity, which fossil fuels may be comprised in a storage of the charging station. A stationary fossil fuel storage may alternatively be fluidly connected to the genset.

The grid connection 210e may be a connection to the electric grid in an area where the charging station 200 is deployed, such that charging may be carried out using grid power supplied via the charging interface 220.

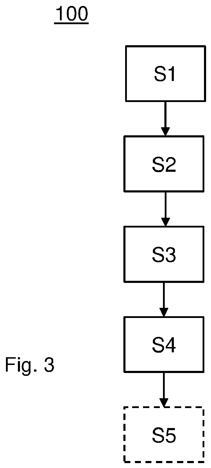

A **method 100** of controlling electric charging of at least one electrically powered machine 400 is shown in **Fig. 3****.** The method 100 is performed by the charging station 200. As described above, the charging station 200 comprises a plurality of electric energy sources 210a-e, a charging interface 220 for electrically connecting with an electrically powered machine 400, and a control unit 230. The method 100 comprises **collecting S1** data about each one of the at least one electrically powered machine 400 and **obtaining S2** a status of each one of the plurality of electric energy sources 210. The method 100 further comprises **determining S3** a charging strategy based on the collected data, the obtained status and on a pre-determined charging focus of the charging strategy. The charging station subsequently **charges S4** the at least one electrically powered machine 400 according to the determined charging strategy. If, for some reason, the charging S4 fails, an alert may be **issued S5,** such as to bring the electrically powered machine 400 to the attention of maintenance staff and/or any manager of a fleet of electrically powered machines or a management system of a work site

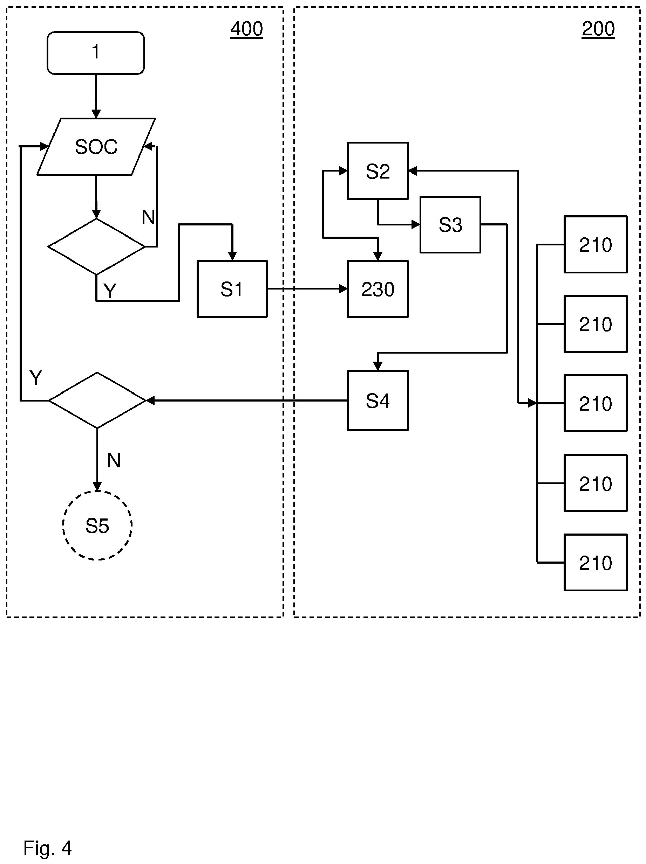

The method 100 is further illustrated in **Fig. 4****,** which shows a flowchart of the steps of the method 100 and the interaction between electrically powered machines 400 and the charging station 200.

Initially, an electrically powered machine 400 **checks 1** the **state of charge SOC** of an electric energy storage system, such as a battery, of the electrically powered machine 400. If there is a need of charging (Y), the data relating to the charging needs is collected in step S1 by the control unit 230 of the charging station 200. If there is no need of charging, no action is taken. After operation of the electrically powered machine, subsequent data checks will eventually detect a need of charging. Further data which may be collected by the control unit 230 may relate to consumption rate, location, work schedule and/or handling time of the electrically powered machine 400. The data may be collected by wireless communication between the electrically powered machine 400 and the charging station 200. The data may be requested from the electrically powered machine 400 by the charging station 200 and sent to the charging station 200 in response to the request by the electrically powered machine 400. The data may alternatively be sent periodically to the charging station 200 by the electrically powered machine 400. Alternatively, the data may be uploaded to a cloud service (not shown) by the electrically powered machine 400. The data may thereafter be accessed by the charging station 200 to determine the charging needs.

A status of each one of the plurality of electric energy sources 210 is obtained in step S2 and communicated to the control unit 230. The status may relate to availability, i.e. energy level, and/or cost of electric power at each one of the plurality of electric energy sources and/or CO2 emissions of the available electric energy.

Thereafter, the control unit 230 processes the collected data and the obtained status in view of the pre-determined charging focus of the charging station 200 to determine in step S3 the charging strategy. The charging strategy enables optimizing the operation of the at least one electrically powered machine 400 and/or operation of the charging station 200 in terms of cost, CO2 emissions, productivity, battery lifetime, etc. Subsequently, at least one electrically powered machine 400 is charged in step S4 by the charging station 200. After a successful charging operation, the electrically powered machine 400 resumes its work schedule and is returned to data collection relating to charging needs. In case the charging operation fails, an alert may be issued S5, such as to bring the electrically powered machine 400 to the attention of maintenance staff and/or any manager of a fleet of electrically powered machines or a management system of a work site.

The step S3 of determining the charging strategy comprises selecting at least one of the plurality of the electric energy sources 210a-e and setting a charging power for each one of the at least one selected electric energy sources 210a-e to be used when charging the at least one electrically powered machine 400 in view of the pre-determined charging focus of the charging strategy, i.e. such that the charging of the electrically powered machines 400 is carried out in a manner that optimizes the pre-determined charging focus, which may, for instance, be the productivity of a fleet of electrically powered machines at a work site.

The step of selecting at least one of the plurality of the electric energy sources 210 and the step of setting the charging power for each one of the at least one electric energy sources 210 may be based on the data collected about the at least one electrically powered machine and/or on the obtained status of each one of the plurality of energy sources 210.

The data collected about each one of the at least one electrically powered machine 400 relates to at least one of a state of charge of an electric energy storage, consumption rate of electric energy, geographic location, work schedule, and/or handling time, and wherein the status obtained of each one of the plurality of electric energy sources 210 relates to at least one of a state of charge, a power capacity, a fuel level, a cost of electric energy and/or a CO2 emission factor of the electric energy available from the electric energy source 210.

As such, the charging strategy may determine to use only CO2-neutral electric energy sources 210 if the charging focus is to minimize CO2 emissions. Charging power may for instance be maximized for a fast-charging operation or minimized in order to prolong a battery lifetime. An electrically powered machine 400 which is geographically far away from the charging station 200 may be moved down in a charging queue if it is deemed more efficient to start charging electrically powered machines 400 which are nearby.

It is to be understood that the present invention is not limited to the embodiments described above and illustrated in the drawings; rather, the skilled person will recognize that many changes and modifications may be made within the scope of the appended claims.

## Claims

1. A method (100) of controlling electric charging of at least one electrically powered machine (400), wherein the method is performed by a charging station (200) comprising a plurality of electric energy sources (210), a charging interface (220) for electrically connecting with an electrically powered machine (400), and a control unit (230), the method comprising
- collecting (S1) data about each one of the at least one electrically powered machine (400),
- obtaining (S2) a status of each one of the plurality of electric energy sources (210),
wherein the method further comprises determining (S3) a charging strategy based on the collected data, the obtained status and on a pre-determined charging focus of the charging strategy, and subsequently charging (S4) the at least one electrically powered machine (400) according to the determined charging strategy.

2. The method (100) according to claim 1, wherein determining (S3) the charging strategy comprises selecting at least one electrically powered machine (400) to charge, selecting at least one of the plurality of the electric energy sources (210) and setting a charging power for each one of the at least one selected electric energy sources (210) to be used when charging (S4) the at least one electrically powered machine (400) in view of the pre-determined charging focus of the charging strategy.

3. The method (100) according to claim 2, wherein selecting at least one electrically powered machine (400), selecting at least one of the plurality of the electric energy sources (210) and setting the charging power for each one of the at least one electric energy sources (210) are based on the data collected about the at least one electrically powered machine and/or on the obtained status of each one of the plurality of energy sources (210).

4. The method (100) according to claim 3, wherein the data collected about each one of the at least one electrically powered machine (400) relates to at least one of a state of charge of an electric energy storage system of the at least one electrically powered machine (400), consumption rate of electric energy, geographic location, work schedule, and/or handling time, and wherein the status obtained of each one of the plurality of electric energy sources (210) relates to at least one of a state of charge, a power capacity, a fuel level, a cost of electric energy and/or a CO2 emission factor of the electric energy available from the electric energy source (210).

5. The method (100) according to any one of the preceding claims, wherein the pre-determined charging focus is based on at least one of:
- a lifetime of at least one of the plurality of electric energy sources (210),
- a cost of electric energy,
- charging time,
- a productivity of the at least one electrically powered machine, and
- CO2 emissions.

6. The method (100) according to any one of the preceding claims, wherein at least two electrically powered machines require charging and wherein the pre-determined charging focus is based on at least one of:
- a total productivity of the at least two electrically powered machines, and
- CO2 emissions.

7. The method (100) according to claim 6, comprising simultaneous charging of a plurality of electrically powered machines using an individually determined charging strategy for each one of the electrically powered machines.

8. A control unit (230) configured to monitor and control electric charging of at least one electrically powered machine according to the method of any one of the claims 1-7.

9. A charging station (200) comprising a plurality of electric energy sources (210), a charging interface (220) for electrically connecting with an electrically powered machine, and the control unit (230) according to claim 8.

10. The charging station (200) according to claim 9, wherein the plurality of electric energy sources (210) comprises at least one of a power battery, an energy battery, a fuel cell, a genset and/or a grid connection.

11. The charging station (200) according to claim 9 or 10, wherein the charging station (200) is mobile.

12. A computer program comprising program code means for performing the method of any one of the claims 1-7 when the program is run on the control unit (230) according to claim 8.

13. A computer readable medium having stored thereon the computer program of claim 12.

14. A vehicle or vessel (300) comprising the charging station (200) according to claim 11.
